(19) Europäisches Patentamt
European Patent Office
Office européen des brevets

(11) **EP 4 123 760 A1**

(12) **EUROPEAN PATENT APPLICATION**
published in accordance with Art. 153(4) EPC

(43) Date of publication:
**25.01.2023 Bulletin 2023/04**

(21) Application number: **20925538.9**

(22) Date of filing: **21.05.2020**

(51) International Patent Classification (IPC):
**H01M 4/587** (2010.01)    **C01B 32/184** (2017.01)

(52) Cooperative Patent Classification (CPC):
Y02E 60/10

(86) International application number:
**PCT/CN2020/091581**

(87) International publication number:
**WO 2021/184532 (23.09.2021 Gazette 2021/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.03.2020  CN 202010204988**

(71) Applicant: **Ningde Amperex Technology Limited Zhangwan Town, Jiaocheng District Ningde City Fujian 352100 (CN)**

(72) Inventors:
• **FENG, Pengyang**
  **Ningde City, Fujian 352100 (CN)**
• **CAI, Yuxin**
  **Ningde City, Fujian 352100 (CN)**
• **DONG, Jiali**
  **Ningde City, Fujian 352100 (CN)**
• **XIE, Yuansen**
  **Ningde City, Fujian 352100 (CN)**

(74) Representative: **Klunker IP Patentanwälte PartG mbB Destouchesstraße 68 80796 München (DE)**

(54) **NEGATIVE ELECTRODE ACTIVE MATERIAL, ELECTROCHEMICAL DEVICE USING SAME, AND ELECTRONIC APPARATUS**

(57)    This application relates to an anode active material, and an electrochemical device and electronic device using such anode active material. This application provides an anode active material, including graphite. Controlling a graphitization degree of particles of different particle sizes of the anode active material can achieve a balance between kinetic performance and first cycle efficiency of the electrochemical device.

FIG. 1

**Description**

**TECHNICAL FIELD**

This application relates to the field of energy storage, and specifically, to an anode active material, and an electrochemical device and electronic device using such anode active material.

**BACKGROUND**

Electrochemical devices (for example, lithium-ion batteries) are widely applied thanks to their environmental friendliness, high working voltage, large specific capacity, and long cycle life, and have become a new type of green chemical power source with the greatest development potential in the world today. Small-sized lithium-ion batteries are usually used as power sources for driving portable electronic communications devices (for example, camcorders, mobile phones, or notebook computers), and in particular, for high-performance portable devices. Medium-sized and large-sized lithium-ion batteries with high output characteristics are developed and applied to electric vehicles (EV) and large-scale energy storage systems (ESS). With widespread application of the lithium-ion batteries, how the lithium-ion batteries have both good kinetic performance and first cycle efficiency has become a key technical issue to be addressed urgently. Improving active materials of electrodes is one of research directions for resolving the above issues.

In view of this, it is indeed necessary to provide an improved anode active material, and an electrochemical device and electronic device using such anode active material.

**SUMMARY**

This application provides an anode active material, and an electrochemical device and electronic device using such anode active material, in an attempt to resolve at least one problem in the related art at least to some extent.

According to one aspect of this application, this application provides an anode active material, including graphite, where according to Raman spectroscopy, for particles having Dv50 of 7.1 $\mu$m to 15.1 $\mu$m of the anode active material, a ratio $ID^1/IG^1$ of a peak intensity $ID^1$ at 1350 cm$^{-1}$ to a peak intensity $IG^1$ at 1580 cm$^{-1}$ ranges from 0.41 to 0.63, and for particles having Dv50 of 23.5 $\mu$m to 39.9 $\mu$m of the anode active material, a ratio $ID^2/IG^2$ of a peak intensity $ID^2$ at 1350 cm$^{-1}$ to a peak intensity $IG^2$ at 1580 cm$^{-1}$ ranges from 0.18 to 0.39.

In some embodiments, according to Raman spectroscopy, $ID^1/IG^1$ of the particles having Dv50 of 7.1 $\mu$m to 15.1 $\mu$m of the anode active material ranges from 0.45 to 0.60. In some embodiments, according to Raman spectroscopy, $ID^1/IG^1$ of the particles having Dv50 of 7.1 $\mu$m to 15.1 $\mu$m of the anode active material ranges from 0.50 to 0.55. In some embodiments, according to Raman spectroscopy, $ID^2/IG^2$ of the particles having Dv50 of 23.5 $\mu$m to 39.9 $\mu$m of the anode active material ranges from 0.20 to 0.35. In some embodiments, according to Raman spectroscopy, $ID^2/IG^2$ of the particles having Dv50 of 23.5 $\mu$m to 39.9 $\mu$m of the anode active material ranges from 0.25 to 0.30.

According to an embodiment of this application, according to Raman spectroscopy, the anode active material has an average value of a ratio ID/IG of a peak intensity ID at 1350 cm$^{-1}$ to a peak intensity IG at 1580 cm$^{-1}$ ranging from 0.15 to 0.50, with a standard deviation of 0.02 to 0.23. The "average value of ID/IG" and the "standard deviation" are based on the whole anode active material. In some embodiments, according to Raman spectroscopy, the anode active material has an average value of ID/IG ranging from 0.18 to 0.40, with a standard deviation of 0.05 to 0.20. In some embodiments, according to Raman spectroscopy, the anode active material has an average value of ID/IG ranging from 0.20 to 0.35, with a standard deviation of 0.08 to 0.18. In some embodiments, according to Raman spectroscopy, the anode active material has an average value of ID/IG ranging from 0.25 to 0.30, with a standard deviation of 0.10 to 0.15.

According to an embodiment of this application, according to an X-ray diffraction method, a grain size La of graphite in a horizontal direction ranges from 70 nm to 90 nm, and a grain size Lc of graphite in a vertical direction ranges from 20 nm to 30 nm. In some embodiments, according to an X-ray diffraction method, a grain size La of graphite in a horizontal direction ranges from 73 nm to 86 nm. In some embodiments, according to an X-ray diffraction method, a grain size La of graphite in a horizontal direction ranges from 76 nm to 84 nm. In some embodiments, according to an X-ray diffraction method, a grain size Lc of graphite in a vertical direction ranges from 22 nm to 25 nm.

According to an embodiment of this application, there is an amorphous carbon layer on a surface of graphite, and a thickness of the amorphous carbon layer ranges from 1 nm to 50 nm. In some embodiments, the thickness of the amorphous carbon layer ranges from 2 nm to 40 nm. In some embodiments, the thickness of the amorphous carbon layer ranges from 5 nm to 30 nm. In some embodiments, the thickness of the amorphous carbon layer ranges from 8 nm to 25 nm. In some embodiments, the thickness of the amorphous carbon layer is 1 nm, 5 nm, 8 nm, 10 nm, 15 nm, 20 nm, 25 nm, 30 nm, 35 nm, 40 nm, 45 nm, or 50 nm.

According to an embodiment of this application, the anode active material satisfies at least one of condition (a) or (b):

(a) that under a pressure of 5t, compacted density of the anode active material ranges from 1.80 g/cm$^3$ to 2.00 g/cm$^3$; or
(b) that Dv50 of the anode active material ranges from 10.0 $\mu$m to 23.0 $\mu$m, and that Dv99 of the anode active material ranges from 29.9 $\mu$m to 50.2 $\mu$m.

In some embodiments, under the pressure of 5t, the compacted density of the anode active material ranges from 1.83 g/cm$^3$ to 1.95 g/cm$^3$. In some embodiments, under the pressure of 5t, the compacted density of the anode active material ranges from 1.87 g/cm$^3$ to 1.90 g/cm$^3$. In some embodiments, under the pressure of 5t, the compacted density of the anode active material is 1.80 g/cm$^3$, 1.82 g/cm$^3$, 1.84 g/cm$^3$, 1.86 g/cm$^3$, 1.88 g/cm$^3$, 1.90 g/cm$^3$, 1.92 g/cm$^3$, 1.94 g/cm$^3$, 1.96 g/cm$^3$, 1.98 g/cm$^3$, or 2.00 g/cm$^3$.

In some embodiments, Dv50 of the anode active material ranges from 12.0 $\mu$m to 20.0 $\mu$m. In some embodiments, Dv50 of the anode active material ranges from 15.0 $\mu$m to 18.0 $\mu$m. In some embodiments, Dv50 of the anode active material is 10.0 $\mu$m, 11.0 $\mu$m, 12.0 $\mu$m, 13.0 $\mu$m, 14.0 $\mu$m, 15.0 $\mu$m, 16.0 $\mu$m, 17.0 $\mu$m, 18.0 $\mu$m, 20.0 $\mu$m, or 23.0 $\mu$m.

In some embodiments, Dv99 of the anode active material ranges from 30.0 $\mu$m to 50.0 $\mu$m. In some embodiments, Dv99 of the anode active material ranges from 35.0 $\mu$m to 45.0 $\mu$m. In some embodiments, Dv99 of the anode active material ranges from 35.0 $\mu$m to 40.0 $\mu$m. In some embodiments, Dv99 of the anode active material is 29.9 $\mu$m, 30.0 $\mu$m, 35.0 $\mu$m, 40.0 $\mu$m, 45.0 $\mu$m, 50.0 $\mu$m, or 50.2 $\mu$m.

According to another aspect of this application, this application provides an electrochemical device, including a cathode, a separator, an electrolyte, and an anode, where the anode includes an anode current collector and an anode active material layer, and the anode active material layer includes the anode active material according to this application.

According to an embodiment of this application, when the electrochemical device is in a fully charged state, the anode active material layer has an average value of a ratio ID'/IG' of a peak intensity ID' at 1350 cm$^{-1}$ to a peak intensity IG at 1580 cm$^{-1}$ ranging from 0.19 to 0.50, with a standard deviation of 0.01 to 0.2. In some embodiments, when the electrochemical device is in a fully charged state, the anode active material layer has an average value of ID'/IG' ranging from 0.20 to 0.45, with a standard deviation of 0.05 to 0.18. In some embodiments, when the electrochemical device is in a fully charged state, the anode active material layer has an average value of ID'/IG' ranging from 0.25 to 0.40, with a standard deviation of 0.08 to 0.15. In some embodiments, when the electrochemical device is in a fully charged state, the anode active material layer has an average value of ID'/IG' ranging from 0.30 to 0.35, with a standard deviation of 0.10 to 0.15.

According to an embodiment of this application, when the electrochemical device is in a fully charged state, according to differential scanning calorimetry, an exothermic area of the anode active material layer ranges from 500 J/g to 2000 J/g at 50°C to 450°C. In some embodiments, when the electrochemical device is in a fully charged state, according to differential scanning calorimetry, an exothermic area of the anode active material layer ranges from 600 J/g to 1800 J/g at 50°C to 450°C. In some embodiments, when the electrochemical device is in a fully charged state, according to differential scanning calorimetry, an exothermic area of the anode active material layer ranges from 800 J/g to 1500 J/g at 50°C to 450°C. In some embodiments, when the electrochemical device is in a fully charged state, according to differential scanning calorimetry, an exothermic area of the anode active material layer ranges from 1000 J/g to 1200 J/g at 50°C to 450°C.

According to an embodiment of this application, the anode active material layer satisfies at least one of condition (d) or (e):

(d) that a thickness of the anode active material layer ranges from 90 $\mu$m to 160 $\mu$m; or
(e) that when the electrochemical device is in a fully charged state, according to an X-ray diffraction method, a ratio C004/C110 of a peak area C004 of a (004) plane to a peak area C110 of a (110) plane of the anode active material layer ranges from 6 to 15.

In some embodiments, a thickness of the anode active material layer ranges from 100 $\mu$m to 155 $\mu$m. In some embodiments, a thickness of the anode active material layer ranges from 105 $\mu$m to 150 $\mu$m. In some embodiments, a thickness of the anode active material layer is 90 $\mu$m, 100 $\mu$m, 110 $\mu$m, 120 $\mu$m, 130 $\mu$m, 140 $\mu$m, 150 $\mu$m, or 160 $\mu$m.

According to an embodiment of this application, the anode further includes a conductive layer, where the conductive layer is disposed between the anode current collector and the anode active material layer, and the conductive layer satisfies at least one of condition (f) or (g):

(f) that a thickness of the conductive layer ranges from 0.3 $\mu$m to 3 $\mu$m ; or
(g) that the conductive layer includes a carbon material, where the carbon material includes at least one of carbon nanotube, carbon fiber, carbon black, or graphene.

In some embodiments, a thickness of the function layer ranges from 0.5 $\mu$m to 2.5 $\mu$m. In some embodiments,

a thickness of the function layer ranges from 1.0 $\mu$m to 2.0 $\mu$m. In some embodiments, a thickness of the function layer is 0.3 $\mu$m, 0.5 $\mu$m, 1.0 $\mu$m, 1.5 $\mu$m, 2.0 $\mu$m, 2.5 $\mu$m, or 3 $\mu$m .

According to still another aspect of this application, this application provides an electronic device, including the electrochemical device according to this application.

Additional aspects and advantages of this application are partially described and presented in subsequent descriptions, or explained by implementation of the embodiments of this application.

## BRIEF DESCRIPTION OF DRAWINGS

To describe embodiments of this application, the following briefly describes the accompanying drawings required for describing the embodiments of this application or the prior art. Apparently, the accompanying drawings described below are merely some embodiments of this application. Those skilled in the art may still obtain drawings of other embodiments based on the results illustrated in these drawings without creative efforts.

FIG. 1 is a distribution diagram of $ID^1/IG^1$ for particles having Dv50 of 7.1 $\mu$m to 15.1 $\mu$m in an anode active material according to Example 1 of this application.

FIG. 2 is a distribution diagram of $ID^2/IG^2$ for particles having Dv50 of 23.5 $\mu$m to 39.9 $\mu$m in an anode active material according to Example 1 of this application.

FIG. 3 shows a differential scanning calorimetry (DSC) spectrum of an anode active material layer according to Example 7 of this application.

## DESCRIPTION OF EMBODIMENTS

Embodiments of this application are described in detail below. The embodiments in related accompanying drawings described herein are descriptive and illustrative, and are used to provide a basic understanding of this application. The embodiments of this application shall not be construed as a limitation on this application.

In descriptions of the embodiments and claims, a list of items preceded by the term "at least one of" may mean any combination of the listed items. For example, if items A and B are listed, the phrase "at least one of A and B" means only A; only B; or A and B. In another example, if items A, B, and C are listed, the phrase "at least one of A, B, and C" means only A; only B; only C; A and B (exclusive of C); A and C (exclusive of B); B and C (exclusive of A); or all of A, B, and C. The item A may contain a single element or a plurality of elements. The item B may contain a single element or a plurality of elements. The item C may contain a single element or a plurality of elements.

As used herein, "Dv50" refers to a particle size of an anode active material that reaches 50% of a cumulative volume from a small particle size side in volumebased particle size distribution, that is, a volume of the anode active material whose particle size is less than this particle size accounts for 50% of a total volume of the anode active material.

As used herein, "Dv99" refers to a particle size of an anode active material that reaches 99% of a cumulative volume from a small particle size side in volumebased particle size distribution, that is, a volume of the anode active material whose particle size is less than this particle size accounts for 99% of a total volume of the anode active material.

Dv50 and Dv99 of the anode active material may be measured by using a common method in the art, for example, using a laser particle size analyzer (for example, a Malvern particle size tester).

As used herein, "fully charged state" is a state when an electrochemical device is charged to 4.45 V at a constant current.

Unless otherwise specified, the electrochemical device of this application is in a 50% state of charge (SOC).

In an initial charge process of the electrochemical device (a lithium-ion battery is used as an example below), a solid electrolyte interface (SEI) film is formed on the surface of the anode active material. The formation of the SEI film has important influence on the performance of a lithium-ion battery. On one hand, the SEI film can exist stably in an electrolyte to prevent a solvent molecule in the electrolyte from entering an anode active material, helping improve cycling performance of the lithium-ion battery. On the other hand, the formation of the SEI film consumes lithium ions, increasing an irreversible capacity during initial charging and discharging, and reducing first cycle efficiency of the lithium-ion battery. The formation of the SEI film is related to a surface defect degree (also referred to as a disorder degree) of the anode active material. High surface defect degree of the anode active material will increase the formation of SEI film and consume more consumed lithium ions.

In this application, SEI film formation is controlled by adjusting the surface defect degree of the anode active material, so as to achieve a balance between the first cycle efficiency and kinetic performance of the lithium-ion battery. The surface defect degree of the anode active material can be characterized by a ratio of a peak intensity at 1350 cm$^{-1}$ to a peak intensity at 1580 cm$^{-1}$ in Raman spectroscopy. Specifically, this application provides an anode active material, including graphite, where according to Raman spectroscopy, for particles having Dv50 of 7.1 $\mu$m to 15.1 $\mu$m of the anode active material, a ratio $ID^1/IG^1$ of a peak intensity $ID^1$ at 1350 cm$^{-1}$ to a peak intensity $IG^1$ at 1580 cm$^{-1}$ ranges

from 0.41 to 0.63, and for particles having Dv50 of 23.5 $\mu$m to 39.9 $\mu$m of the anode active material, a ratio $ID^2/IG^2$ of a peak intensity $ID^2$ at 1350 cm$^{-1}$ to a peak intensity $IG^2$ at 1580 cm$^{-1}$ ranges from 0.18 to 0.39.

Graphite particles of different particle sizes in the anode active material can be obtained by using any crushing and classification means known in the art. Surface defect degrees of particles of different particle sizes of the anode active material can be controlled by using the liquid phase coating method and a subsequent carbonization process. The surface defect degrees of the particles of different particle sizes of the anode active material are controlled, so that the anode active material in this application helps to balance the first cycle efficiency and dynamic performance of the electrochemical device.

In some embodiments, according to Raman spectroscopy, $ID^1/IG^1$ of the particles having Dv50 of 7.1 $\mu$m to 15.1 $\mu$m of the anode active material ranges from 0.45 to 0.60. In some embodiments, according to Raman spectroscopy, $ID^1/IG^1$ of the particles having Dv50 of 7.1 $\mu$m to 15.1 $\mu$m of the anode active material ranges from 0.50 to 0.55. In some embodiments, according to Raman spectroscopy, $ID^2/IG^2$ of the particles having Dv50 of 23.5 $\mu$m to 39.9 $\mu$m of the anode active material ranges from 0.20 to 0.35. In some embodiments, according to Raman spectroscopy, $ID^2/IG^2$ of the particles having Dv50 of 23.5 $\mu$m to 39.9 $\mu$m of the anode active material ranges from 0.25 to 0.30.

According to an embodiment of this application, according to Raman spectroscopy, the anode active material has an average value of a ratio ID/IG of a peak intensity ID at 1350 cm$^{-1}$ to a peak intensity IG at 1580 cm$^{-1}$ ranging from 0.15 to 0.50, with a standard deviation of 0.02 to 0.23. The "average value of ID/IG" and the "standard deviation" are based on the whole anode active material (that is, the anode active material that has not been sieved). The average value of ID/IG of the anode active material indicates a surface defect degree of the entire anode active material, and the standard indicates uniformity of surface defect degrees in different regions of the anode active material. A smaller standard deviation indicates more uniform distribution of the surface defect degrees of the anode active material.

In some embodiments, according to Raman spectroscopy, the anode active material has an average value of ID/IG ranging from 0.18 to 0.40, with a standard deviation of 0.05 to 0.20. In some embodiments, according to Raman spectroscopy, the anode active material has an average value of ID/IG ranging from 0.20 to 0.35, with a standard deviation of 0.08 to 0.18. In some embodiments, according to Raman spectroscopy, the anode active material has an average value of ID/IG ranging from 0.25 to 0.30, with a standard deviation of 0.10 to 0.15.

According to an embodiment of this application, according to an X-ray diffraction method, a grain size La of graphite in a horizontal direction ranges from 70 nm to 90 nm, and a grain size Lc of graphite in a vertical direction ranges from 20 nm to 30 nm. In some embodiments, according to an X-ray diffraction method, a grain size La of graphite in a horizontal direction ranges from 73 nm to 86 nm. In some embodiments, according to an X-ray diffraction method, a grain size La of graphite in a horizontal direction ranges from 76 nm to 84 nm. In some embodiments, according to an X-ray diffraction method, a grain size Lc of graphite in a vertical direction ranges from 22 nm to 25 nm.

According to an embodiment of this application, there is an amorphous carbon layer on a surface of graphite, and a thickness of the amorphous carbon layer ranges from 1 nm to 50 nm. In some embodiments, the thickness of the amorphous carbon layer ranges from 2 nm to 40 nm. In some embodiments, the thickness of the amorphous carbon layer ranges from 5 nm to 30 nm. In some embodiments, the thickness of the amorphous carbon layer ranges from 8 nm to 25 nm. In some embodiments, the thickness of the amorphous carbon layer is 1 nm, 5 nm, 8 nm, 10 nm, 15 nm, 20 nm, 25 nm, 30 nm, 35 nm, 40 nm, 45 nm, or 50 nm.

According to an embodiment of this application, under a pressure of 5t, the compacted density of the anode active material ranges from 1.80 g/cm$^3$ to 2.00 g/cm$^3$. In some embodiments, under the pressure of 5t, the compacted density of the anode active material ranges from 1.83 g/cm$^3$ to 1.95 g/cm$^3$. In some embodiments, under the pressure of 5t, the compacted density of the anode active material ranges from 1.87 g/cm$^3$ to 1.90 g/cm$^3$. In some embodiments, under the pressure of 5t, the compacted density of the anode active material is 1.80 g/cm$^3$, 1.82 g/cm$^3$, 1.84 g/cm$^3$, 1.86 g/cm$^3$, 1.88 g/cm$^3$, 1.90 g/cm$^3$, 1.92 g/cm$^3$, 1.94 g/cm$^3$, 1.96 g/cm$^3$, 1.98 g/cm$^3$, or 2.00 g/cm$^3$.

According to an embodiment of this application, Dv50 of the anode active material ranges from 10.0 $\mu$m to 23.0 $\mu$m, and Dv99 of the anode active material ranges from 29.9 $\mu$m to 50.2 $\mu$m. In some embodiments, Dv50 of the anode active material ranges from 12.0 $\mu$m to 20.0 $\mu$m. In some embodiments, Dv50 of the anode active material ranges from 15.0 $\mu$m to 18.0 $\mu$m. In some embodiments, Dv50 of the anode active material is 10.0 $\mu$m, 11.0 $\mu$m, 12.0 $\mu$m, 13.0 $\mu$m, 14.0 $\mu$m, 15.0 $\mu$m, 16.0 $\mu$m, 17.0 $\mu$m, 18.0 $\mu$m, 20.0 $\mu$m, or 23.0 $\mu$m. In some embodiments, Dv99 of the anode active material ranges from 30.0 $\mu$m to 50.0 $\mu$m. In some embodiments, Dv99 of the anode active material ranges from 35.0 $\mu$m to 45.0 $\mu$m. In some embodiments, Dv99 of the anode active material ranges from 35.0 $\mu$m to 40.0 $\mu$m. In some embodiments, Dv99 of the anode active material is 29.9 $\mu$m, 30.0 $\mu$m, 35.0 $\mu$m, 40.0 $\mu$m, 45.0 $\mu$m, 50.0 $\mu$m, or 50.2 $\mu$m.

According to an embodiment of this application, the anode active material includes a first particle and a second particle, and a particle size of the first particle is different from a particle size of the second particle.

This application further provides an electrochemical device, including an anode, and the anode includes an anode current collector and an anode active material layer.

Anode

In the electrochemical device of this application, the anode active material layer includes the anode active material according to this application.

According to an embodiment of this application, a thickness of the anode active material layer ranges from 90 $\mu$m to 160 $\mu$m. In some embodiments, a thickness of the anode active material layer ranges from 100 $\mu$m to 155 $\mu$m. In some embodiments, a thickness of the anode active material layer ranges from 105 $\mu$m to 150 $\mu$m. In some embodiments, a thickness of the anode active material layer is 90 $\mu$m, 100 $\mu$m, 110 $\mu$m, 120 $\mu$m, 130 $\mu$m, 140 $\mu$m, 150 $\mu$m, or 160 $\mu$m.

According to an embodiment of this application, when the electrochemical device is in a fully charged state, according to an X-ray diffraction method, a ratio C004/C110 of a peak area C004 of a (004) plane to a peak area C110 of a (110) plane of the anode active material layer ranges from 6 to 15. The C004/C110 value of the anode active material layer can reflect anisotropy of the anode active material layer. A smaller C004/C110 value of the anode active material indicates smaller anisotropy but greater isotropy of the anode active material layer. This helps to improve the kinetic performance of the electrochemical device.

According to an embodiment of this application, the anode further includes a function layer, where the function layer is disposed between the anode current collector and the anode active material layer.

According to an embodiment of this application, a thickness of the function layer ranges from 0.3 $\mu$m to 3 $\mu$m. In some embodiments, a thickness of the function layer ranges from 0.5 $\mu$m to 2.5 $\mu$m. In some embodiments, a thickness of the function layer ranges from 1.0 $\mu$m to 2.0 $\mu$m. In some embodiments, a thickness of the function layer is 0.3 $\mu$m, 0.5 $\mu$m, 1.0 $\mu$m, 1.5 $\mu$m, 2.0 $\mu$m, 2.5 $\mu$m, or 3 $\mu$m .

According to an embodiment of this application, the function layer includes a carbon material, where the carbon material includes at least one of carbon nanotube, carbon fiber, carbon black, or graphene.

According to an embodiment of this application, the function layer is a conductive layer.

According to an embodiment of this application, when the electrochemical device is in a fully charged state, the anode active material layer has an average value of a ratio ID'/IG' of a peak intensity ID' at 1350 cm$^{-1}$ to a peak intensity IG at 1580 cm$^{-1}$ ranging from 0.19 to 0.50, with a standard deviation of 0.01 to 0.2. In some embodiments, when the electrochemical device is in a fully charged state, the anode active material layer has an average value of ID'/IG' ranging from 0.20 to 0.45, with a standard deviation of 0.05 to 0.18. In some embodiments, when the electrochemical device is in a fully charged state, the anode active material layer has an average value of ID'/IG' ranging from 0.25 to 0.40, with a standard deviation of 0.08 to 0.15. In some embodiments, when the electrochemical device is in a fully charged state, the anode active material layer has an average value of ID'/IG' ranging from 0.30 to 0.35, with a standard deviation of 0.10 to 0.15.

According to an embodiment of this application, when the electrochemical device is in a fully charged state, according to differential scanning calorimetry, an exothermic area of the anode active material layer ranges from 500 J/g to 2000 J/g at 50°C to 450°C. In some embodiments, when the electrochemical device is in a fully charged state, according to differential scanning calorimetry, an exothermic area of the anode active material layer ranges from 600 J/g to 1800 J/g at 50°C to 450°C. In some embodiments, when the electrochemical device is in a fully charged state, according to differential scanning calorimetry, an exothermic area of the anode active material layer ranges from 600 J/g to 1800 J/g at 50°C to 450°C. In some embodiments, when the electrochemical device is in a fully charged state, according to differential scanning calorimetry, an exothermic area of the anode active material layer ranges from 1000 J/g to 1200 J/g at 50°C to 450°C.

According to this embodiment of this application, the anode current collector used for this application may be selected from copper foil, nickel foil, stainless steel foil, titanium foil, nickel foam, copper foam, a polymer base coated with conductive metal, and a combination thereof.

According to the embodiments of this application, the anode further includes a binder. The binder is selected from at least one of polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(vinylidene fluoride), polyethylene, polypropylene, styrene-butadiene rubber, acrylic styrene-butadiene rubber, epoxy resin, nylon, or the like.

According to this embodiment of this application, the anode can be manufactured by any method known in the prior art. In some embodiments, the anode can be formed by adding a binder and a solvent into the anode active material, adding a thickener, a conductive material, and a filler as needed to make a slurry, coating the slurry on the current collector, and performing compression after drying.

According to this embodiment of this application, when the anode includes an alloy material, the anode active material layer can be formed by using methods such as vapor deposition method, sputtering method, and plating method.

Cathode

The cathode includes a cathode current collector and a cathode active material disposed on the cathode current collector. Specific types of cathode active materials are not subject to specific limitations, and can be selected according to requirements.

According to this embodiment of this application, the cathode active material includes a compound that reversibly intercalates and deintercalates a lithium ion. In some embodiments, the cathode active material may include a composite oxide, and the composite oxide contains lithium and at least one element selected from cobalt, manganese, and nickel. In still other embodiments, the cathode active material is selected from one or more of lithium cobalt oxide ($LiCoO_2$), a lithium nickel manganese cobalt ternary material, lithium manganese oxide ($LiMn_2O_4$), lithium nickel manganese oxide ($LiNi_{0.5}Mn_{1.5}O_4$), and lithium iron phosphate ($LiFePO_4$).

According to this embodiment of this application, a cathode active material layer may have a coating on a surface, or may be mixed with another compound having a coating. The coating may include at least one compound of a coating element selected from oxides of the coating element, hydroxides of the coating element, hydroxyl oxides of the coating element, oxycarbonate (oxycarbonate) of the coating element, and hydroxycarbonate (hydroxycarbonate) of the coating element. The compound used for the coating may be amorphous or crystalline. The coating element contained in the coating may include Mg, Al, Co, K, Na, Ca, Si, Ti, V, Sn, Ge, Ga, B, As, Zr, F, or a mixture thereof. The coating may be applied by using any method, provided that the method does not have adverse impact on performance of the cathode active material. For example, the method may include any coating method well known to a person of ordinary skill in the art, such as spraying or dipping.

According to this embodiment of this application, the cathode active material layer further includes a binder, and optionally, further includes a cathode conductive material.

The binder enhances binding between particles of the cathode active material, and binding between the cathode active material and the current collector. Non-limiting examples of the binder include polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(vinylidene fluoride), polyethylene, polypropylene, styrene-butadiene rubber, acrylic styrene-butadiene rubber, epoxy resin, nylon, and the like.

The cathode active material layer includes a cathode conductive material, thereby imparting conductivity to the electrode. The cathode conductive material may include any conductive material, provided that the conductive material does not cause a chemical change. Non-limiting examples of the cathode conductive material include a carbon-based material (for example, natural graphite, artificial graphite, carbon black, acetylene black, Ketjen black, and carbon fiber), a metal-based material (for example, metal powder, and metal fiber, including copper, nickel, aluminum, and silver), a conductive polymer (for example, a polyphenylene derivative), and a mixture thereof.

The cathode current collector used in the electrochemical device according to this application may be aluminum (Al), but is not limited thereto.

Electrolyte

The electrolyte that can be used in the embodiments of this application may be an electrolyte known in the prior art. An electrolyte that can be used in the electrolyte of the embodiments of this application includes, but is not limited to: inorganic lithium salts, such as $LiClO_4$, $LiAsF_6$, $LiPF_6$, $LiBF_4$, $LiSbF_6$, $LiSO_3F$, and $LiN(FSO_2)_2$; fluorine-containing organic lithium salts, such as $LiCF_3SO_3$, $LiN(FSO_2)(CF_3SO_2)$, $LiN(CF_3SO_2)_2$, $LiN(C_2F_5SO_2)_2$, cyclic 1,3-hexafluoropropane disulfonimide lithium, cyclic 1,2-tetrafluoroethane disulfonimide lithium, $LiN(CF_3SO_2)(C_4F_9SO_2)$, $LiC(CF_3SO_2)_3$, $LiPF_4(CF_3)_2$, $LiPF_4(C_2F_5)_2$, $LiPF_4(CF_3SO_2)_2$, $LiPF_4(C_2F_5SO_2)_2$, $LiBF_2(CF_3)_2$, $LiBF_2(C_2F_5)_2$, $LiBF_2(CF_3SO_2)_2$, and $LiBF_2(C_2F_5SO_2)_2$; lithium salts containing dicarboxylic acid complex, such as bis(oxalato) lithium borate, difluorooxalato lithium borate, tris(oxalato) lithium phosphate, difluorobis (oxalato) lithium phosphate, and tetrafluoro(oxalato) lithium phosphatee. In addition, one of the foregoing electrolytes may be used alone, or two or more thereof may be used. For example, in some embodiments, the electrolyte includes a combination of $LiPF_6$ and $LiBF_4$. In some embodiments, the electrolyte includes a combination of inorganic lithium salt such as $LiPF_6$ or $LiBF_4$ and fluorine-containing organic lithium salt such as $LiCF_3SO_3$, $LiN(CF_3SO_2)_2$, or $LiN(C_2F_5SO_2)_2$.

In some embodiments, a concentration of the electrolyte falls within a range of 0.8mol/L to 3 mol/L, for example, a range of 0.8mol/L to 2.5 mol/L, a range of 0.8mol/L to 2 mol/L, a range of 1mol/L to 2 mol/L, for another example, 1mol/L, 1.15mol/L, 1.2mol/L, 1.5mol/L, 2mol/L, or 2.5mol/L.

A solvent that can be used in the electrolyte of the embodiments of this application includes, but is not limited to, a carbonate compound, an ester-based compound, an ether-based compound, a ketone-based compound, an alcohol-based compound, an aprotic solvent, or a combination thereof.

An example of the carbonate compound includes, but is not limited to, a linear carbonate compound, a cyclic carbonate compound, a fluorocarbonate compound, or a combination thereof.

Examples of the linear carbonate compound include, but are not limited to, diethyl carbonate (DEC), dimethyl carbonate (DMC), dipropyl carbonate (DPC), methyl propyl carbonate (MPC), ethylene propyl carbonate (EPC), ethyl methyl carbonate (MEC), and a combination thereof. Examples of the cyclic carbonate compound are ethylene carbonate (EC), propylene carbonate (PC), butylene carbonate (BC), vinyl ethylene carbonate (VEC), and a combination thereof. Examples of the fluorocarbonate compound are fluoroethylene carbonate (FEC), 4,5-difluoro-1,3-dioxolan-2-one, 4,4-difluoro-1,3-dioxolan-2-one, 4,4,5-trifluoro-1,3-dioxolan-2-one, 4,4,5,5-tetrafluoro-1,3-dioxolan-2-one, 4-fluoro-5-methyl-1,3-dioxolan-2-one, 4-fluoro-4-methyl-1,3-dioxolan-2-one, 4,5-difluoro-4-methyl-1,3-dioxolan-2-one, 4,4,5-trifluoro-5-methyl-1,3-dioxolan-2-one, 4-(trifluoromethyl)-1,3-dioxolan-2-one, and a combination thereof.

Examples of the ester-based compound include but are not limited to methyl acetate, ethyl acetate, n-propyl acetate, tert-butyl acetate, methyl propionate, ethyl propionate, γ-butyrolactone ester, caprolactone, valerolactone, mevalonolactone, caprolactone, methyl formate, and a combination thereof.

Examples of the ether-based compound include but are not limited to dibutyl ether, tetraglyme, diglyme, 1,2-dimethoxyethane, 1,2-diethoxyethane, ethoxymethoxyethane, 2-methyltetrahydrofuran, tetrahydrofuran, and a combination thereof.

An example of the ketone-based compound includes, but is not limited to, cyclohexanone.

Examples of the alcohol-based compounds include, but are not limited to, ethanol and isopropanol.

Examples of the aprotic solvent include, but are not limited to, dimethyl sulfoxide, 1,2-dioxolane, sulfolane, methyl sulfolane, 1,3-dimethyl-2-imidazolidinone, N-methyl -2-pyrrolidone, formamide, dimethylformamide, acetonitrile, nitromethane, trimethyl phosphate, triethyl phosphate, trioctyl phosphate, phosphate ester, and a combination thereof.

Separator

In some embodiments, a separator is provided between the cathode and the anode to prevent a short circuit. A material and shape of the separator that can be used in the embodiments of this application is not specifically limited, and any technology disclosed in the prior art may be used for the separator. In some embodiments, the separator includes a polymer or an inorganic substance formed by a material stable to the electrolyte of this application.

For example, the separator may include a substrate layer and a surface treatment layer. The substrate layer is a non-woven fabric, membrane, or composite membrane having a porous structure, and a material of the substrate layer is selected from at least one of polyethylene, polypropylene, polyethylene terephthalate, or polyimide. Specifically, a polypropylene porous membrane, a polyethylene porous membrane, a polypropylene non-woven fabric, a polyethylene non-woven fabric or a polypropylene-polyethylene-polypropylene porous composite membrane can be selected. The porous structure can improve heat resistance, oxidation resistance, and electrolyte infiltration performance of the separator, and enhance adhesion between the separator and an electrode plate.

A surface treatment layer is disposed on at least one surface of the substrate layer, and the surface treatment layer may be a polymer layer or an inorganic substance layer, or may be a layer formed by a mixture of a polymer and an inorganic substance.

The inorganic layer includes inorganic particles and a binder. The inorganic particles are selected from a combination of one or more of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, and barium sulfate. The binder is selected from a combination of one or more of polyvinylidene fluoride, a vinylidene fluoride-hexafluoropropylene copolymer, polyamide, polyacrylonitrile, polyacrylate, polyacrylic acid, polyacrylate, polyvinylpyrrolidone, polyvinyl ether, polymethyl methacrylate, polytetrafluoroethylene, and polyhexafluoropropylene.

The polymer layer includes a polymer, and a material of the polymer is selected from at least one of polyamide, polyacrylonitrile, an acrylate polymer, polyacrylic acid, polyacrylate, polyvinylpyrrolidone, polyvinyl ether, polyvinylidene fluoride, or poly(vinylidene fluoride-hexafluoropropylene).

Application

The electrochemical device according to this application includes any device in which electrochemical reactions take place. Specific examples of the device include all kinds of primary batteries, secondary batteries, fuel batteries, solar batteries, or capacitors. Particularly, the electrochemical device is a lithium secondary battery, including a lithium metal secondary battery, a lithium-ion secondary battery, a lithium polymer secondary battery, or a lithium-ion polymer secondary battery.

This application provides another electronic device, including the electrochemical device according to this application.

A purpose of the electrochemical device in this application is not specifically limited. It can be used for any known electronic device in the prior art. In some embodiments, the electrochemical device of this application may be used for, without limitation to: a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, a lithium-ion capacitor, or the like.

The following uses a lithium-ion battery as an example and describes preparation of a lithium-ion battery with reference to specific examples. A person skilled in the art understands that a preparation method described in this application is only an example, and that all other suitable preparation methods fall within the scope of this application.

**Examples**

The following describes performance evaluation performed based on examples of a lithium-ion battery in this application and comparative examples.

**I. Preparation of a lithium-ion battery**

1. Preparation of an anode

A graphitized graphite particle and heavy oil or liquid asphalt with a softening point lower than 120°C (with a percentage of 1 wt% to 10 wt%) were fully stirred at a stirring speed of 20 r/min to 100 r/min, and then the mixture was placed in a carbonization furnace and heated to 800°C to 1500°C at a temperature increase rate of 50°C/h to 100°C/h to obtain a liquid phase coated graphite active material.

The prepared graphite active material, styrene-butadiene rubber (SBR), and sodium carboxymethyl cellulose (CMC) were dispersed in deionized water at a weight ratio of 97.7: 1.2: 1.1, fully stirred and mixed uniformly to obtain an anode slurry.

In Examples 1 to 14 and 16 to 32, acetylene black was applied on a copper foil to obtain an anode current collector, with a thickness of the acetylene black layer being 2 $\mu$m. The anode slurry was applied on the anode current collector, dried, and cold pressed to form an anode active material layer, and then the current collector was welded with tabs to obtain an anode.

In Examples 15 and 33, the anode slurry was applied on the anode current collector copper foil, dried, and cold pressed to form an anode active material layer, and then the current collector was welded with tabs to obtain an anode. In Examples 15 and 33, values of ID/IG for different particle sizes of the anode active material were implemented by controlling the graphitization degree of graphite and reducing the size of graphite particles.

Graphite particles of different particle sizes could be obtained by using any crushing and classification means known in the art. Different thicknesses of the different anode active material layer were obtained by controlling an application amount by using any means known in the art.

2. Preparation of a cathode

Lithium cobaltate (LiCoO$_2$), acetylene black, and polyvinylidene fluoride (PVDF) were fully stirred and well mixed in an appropriate amount of N-methylpyrrolidone (NMP) at a weight ratio of 96:2:2, then mixture was applied on a cathode current collector aluminum foil, dried and cold pressed to form a cathode active material layer, and then the current collector was welded with tabs to obtain a cathode.

3. Preparation of an electrolyte

In a dry argon environment, ethylene carbonate (EC), propylene carbonate (PC), and diethyl carbonate (DEC) were mixed at a weight ratio of 1:1:1, and LiPF$_6$ was added and mixed well. 3% fluoroethylene carbonate was added and mixed well to obtain the electrolyte, in which a concentration of LiPF$_6$ was 1.15 mol/L.

4. Preparation of a separator

A porous polyethylene (PE) polymer film with a thickness of 12 $\mu$m was used as the separator.

5. Preparation of a lithium-ion battery

The cathode, separator, and anode were stacked in order, so that the separator was placed between the cathode plate and the anode plate for separation. Then the stack was wound and placed in an outer packaging aluminum foil film. Then the foregoing prepared electrolyte was injected, followed by processes such as vacuum packaging, standing, formation, shaping and capacity testing, to obtain a lithium-ion battery.

## II. Test method

### 1. Method for screening particles of different sizes

The anode active material layer was gently scraped off from the anode, and the scraped anode active material layer was placed in a solvent dimethyl carbonate. The solution was stirred for five minutes, then left for three hours, and filtered. The obtained anode active material was dried at a temperature of 150°C for four hours, and a 40 g sample was placed in a sieve with 300 to 500 meshes for sieving, to obtain oversize and undersize products, thereby obtaining particles having Dv50 of 7.1 $\mu$m to 15.1 $\mu$m and particles having Dv50 of 23.5 $\mu$m to 39.9 $\mu$m.

### 2. Method for testing a particle size

A Malvern particle size tester was used to measure a particle size of the anode active material: A sample was dispersed in dispersant ethanol, and ultrasonicated for 30 minutes. The sample was put into the Malvern particle size tester to test Dv50 or Dv99 of the sample.

### 3. Method for testing a surface defect degree

A surface defect degree of a sample was tested using a laser microscope confocal Raman spectrometer, and a ratio ID/IG of a peak intensity ID at 1350 cm$^{-1}$ to a peak intensity IG at 1580 cm$^{-1}$ of the sample was used to represent the surface defect degree of the sample. Each sample was tested for multiple potentials, and a standard deviation of the potentials was used to characterize uniformity of surface defect degrees in different regions.
The anode active material had the average value and standard deviation of the ID/IG obtained by using the following method: An unsieved anode active material was taken, 100 points were tested to obtain corresponding ID/IG values, and the average value and standard deviation of these 100 values were calculated.

### 3. Test method for a first cycle efficiency of a lithium-ion battery

The lithium-ion battery was charged at 0.5 C to 4.45 V, and an initial charge capacity C was recorded. Then the lithium-ion battery was discharged at 0.5 C to 3.0 V, and its discharge capacity D was recorded. The first cycle efficiency CE of the lithium-ion battery was calculated based on the following formula:

$$CE=D/C.$$

### 4. Method for testing direct current resistance (DCR) of the lithium-ion battery

The lithium-ion battery was constant-current charged to 4.45 V at a current of 1.5C, then charged to 0.05C at a constant voltage of 4.45 V, and left for 30 minutes. The battery was discharged for 10 seconds at a current of 0.1C, and the voltage value was tested and recorded as U1. The battery was discharged for 360 seconds at 1C, and the voltage value was tested and recorded as U2. The above charging and discharging steps were repeated five times to make a state of charge (SOC) of the lithium-ion battery reach 50%. "1C" is a current value at which the capacity of the lithium-ion battery is completely discharged within one hour. The direct current resistance R of the lithium-ion battery in 50% state of charge (SOC) was calculated according to the following formula:

$$R=(U2–U1)/(1C–0.1C).$$

### 5. Method for testing charge rate performance of the lithium-ion battery

The lithium-ion battery was constant-current charged to 4.45 V at a current of 1.5C, and a corresponding capacity was recorded as a CC value. Then the battery was charged to 0.05C at a constant voltage of 4.45 V, and a corresponding capacity of the lithium-ion battery was recorded as a CV value. The value of CC/(CC+CV)$\times$ 100% the lithium-ion battery at 1.5C was calculated.

6. Testing method using differential scanning calorimetry (DSC)

The differential scanning calorimetry test was performed on the anode active material layer according to the GB/T 13464-2008 standard: A crucible loaded with the anode active material layer was placed in a DSC tester, and a purge gas and a protective gas of the tester were adjusted to 60 Ml/min and 20 Ml/min, respectively to perform measurement.

## III. Test result

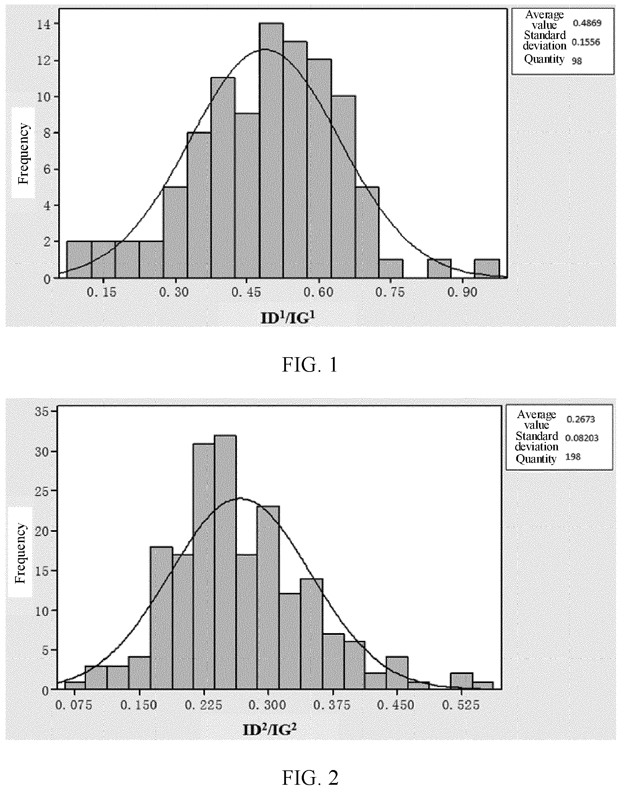

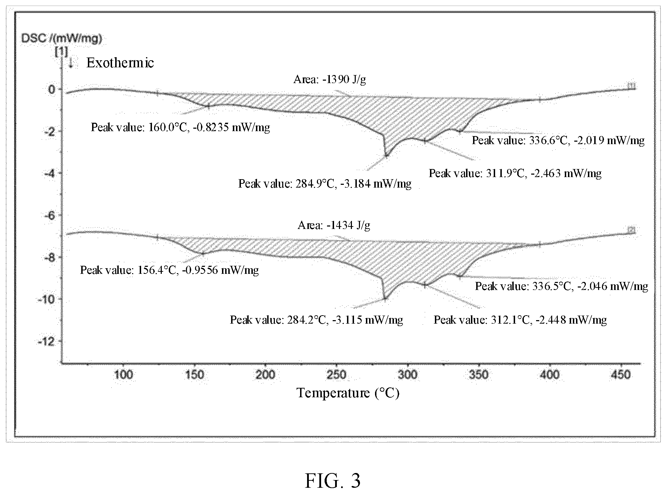

Table 1 shows impact of characteristics of the anode active material on the first cycle efficiency and direct current resistance (DCR) of the lithium-ion battery. FIG. 1 is a distribution diagram of $ID^1/IG^1$ for particles having Dv50 of 7.1 $\mu$m to 15.1 $\mu$m in an anode active material according to Example 1 of this application. FIG. 2 is a distribution diagram of $ID^2/IG^2$ for particles having Dv50 of 23.5 $\mu$m to 39.9 $\mu$m in an anode active material according to Example 1 of this application. The results show that adjusting particle sizes of raw graphite particles could control surface defect degrees of particles of different particle sizes in the anode active material. Smaller particles (having Dv50 of 77.1 $\mu$m to 15.1 $\mu$m) and larger particles (having Dv50 of 23.5 $\mu$m to 39.9 $\mu$m) in the anode active material had basically the same trend in surface defect degrees. When the surface defect degree of the smaller particles in the anode active material was relatively large, the surface defect degree of the larger particles was also relatively large. FIG. 3 shows the differential scanning calorimetry spectrum of the anode active material layer used in Example 7. In two measurements, an average value of exothermic areas of the anode active material layer was 1412 J/g at a temperature of 50°C to 450°C.

As the surface defect degrees of the smaller particles and larger particles in the anode active material increased, the surface defect degree (average ID/IG value) of the anode active material itself increased, and the surface defect degree (average ID'/IG' value) and the exothermic area at a temperature of 50°C to 450°C in the DSC test of the anode active material layer of the lithium-ion battery in the fully charged state increased.

In addition, as the surface defect degrees of the smaller particles and larger particles in the anode active material increased, the direct current resistance (DCR) of the lithium-ion battery reduced, and the kinetic performance was improved, but the first cycle efficiency of the lithium-ion battery reduced. When the surface defect degree ($ID^1/IG^1$) of the smaller particles (having Dv50 of 7.1 $\mu$m to 15.1 $\mu$m Dv50) in the anode active material ranged from 0.41 to 0.63 and the surface defect degree ($ID^2/IG^2$) of the larger particles (having Dv50 of 23.5 $\mu$m to 39.9 $\mu$m) ranged from 0.18 to 0.39, the lithium-ion battery had higher first cycle efficiency and lower direct current resistance, thereby achieving a balance between the kinetic performance and first cycle efficiency. On this basis, further controlling the Dv50 and grain sizes La and Lc of the anode active material, and the thickness and compacted density of the amorphous carbon layer could further improve the first cycle efficiency and direct current resistance (DCR) of the lithium-ion battery, thereby further improving the balance between the kinetic performance and first cycle efficiency of the lithium-ion battery.

**Table 1**

| | ID1/IG1 for particles having Dv50 of 7.1 μm to 15.1 μm in anode active material | ID2/IG2 for particles having Dv50 of 23.5 μm to 39.9 μm in anode active material | Dv50 of anode active material (μm) | Dv99 of anode active material (μm) | Anode active material | | La (nm) | Lc (nm) | Thickness of amorphous carbon layer (nm) | Compacted density of anode active material under 5t (g/cm³) | Exothermic area at temperature of 50°C to 450°C (J/g) | First cycle efficiency | DCR (Ω) |
|---|---|---|---|---|---|---|---|---|---|---|---|---|---|
| | | | | | Average ID/IG value | Standard deviation | | | | | | | |
| Example 1 | 0.49 | 0.27 | 10.0 | 29.9 | 0.18 | 0.15 | 70 | 30 | 1 | 2.00 | 810 | 92.1% | 48.1 |
| Example 2 | 0.45 | 0.23 | 11.3 | 31.0 | 0.16 | 0.16 | 71 | 29 | 1 | 1.98 | 608 | 92.2% | 48.7 |
| Example 3 | 0.41 | 0.18 | 11.7 | 33.6 | 0.15 | 0.16 | 71 | 28 | 1 | 1.97 | 500 | 92.4% | 48.9 |
| Example 4 | 0.56 | 0.32 | 14.1 | 35.3 | 0.23 | 0.12 | 73 | 28 | 20 | 1.92 | 1330 | 91.5% | 45.8 |
| Example 5 | 0.53 | 0.31 | 14.8 | 37.2 | 0.22 | 0.13 | 78 | 27 | 20 | 1.90 | 1216 | 91.6% | 45.9 |
| Example 6 | 0.52 | 0.30 | 14.9 | 38.1 | 0.20 | 0.14 | 79 | 27 | 20 | 1.90 | 1041 | 91.9% | 46.2 |
| Example 7 | 0.62 | 0.34 | 15.9 | 40.3 | 0.24 | 0.13 | 80 | 26 | 25 | 1.87 | 1412 | 91.2% | 44.9 |
| Example 8 | 0.60 | 0.33 | 16.0 | 43.2 | 0.22 | 0.15 | 82 | 25 | 25 | 1.87 | 1237 | 91.4% | 45.3 |
| Example 9 | 0.58 | 0.32 | 16.2 | 43.9 | 0.21 | 0.15 | 83 | 25 | 25 | 1.86 | 1129 | 91.6% | 45.5 |
| Example 10 | 0.63 | 0.39 | 17.8 | 45.2 | 0.30 | 0.14 | 85 | 24 | 50 | 1.83 | 2000 | 88.9% | 43.6 |
| Example 11 | 0.62 | 0.38 | 18.0 | 46.2 | 0.29 | 0.15 | 88 | 23 | 50 | 1.81 | 1909 | 89.6% | 43.8 |
| Example 12 | 0.61 | 0.36 | 18.3 | 50.2 | 0.28 | 0.16 | 90 | 20 | 50 | 1.80 | 1867 | 89.8% | 44.0 |
| Example 13 | 0.55 | 0.31 | 15.1 | 40.1 | 0.23 | 0.10 | 80 | 25 | 20 | 1.89 | 1380 | 91.5% | 45.1 |
| Example 14 | 0.54 | 0.30 | 16.3 | 41.3 | 0.25 | 0.10 | 83 | 26 | 20 | 1.86 | 1601 | 90.3% | 44.6 |
| Example 15 | 0.41 | 0.19 | 8.0 | 28.0 | 0.20 | 0.14 | 50 | 32 | 0 | 1.70 | 500 | 85.6% | 51.0 |
| Comparative Example 1 | 0.22 | 0.10 | 6.0 | 20.0 | 0.11 | 0.03 | 60 | 35 | 0 | 1.75 | 450 | 83.9% | 56.0 |
| Comparative Example 2 | 0.70 | 0.50 | 20.0 | 55.0 | 0.53 | 0.25 | 98 | 32 | 150 | 1.73 | 2100 | 80.0% | 51.0 |

Table 2 shows impact of a thickness and a C004/C110 value of an anode active material layer on charge rate performance of a lithium-ion battery. Except for parameters listed in Table 2, conditions of Examples 16 to 32 were the same as those of Example 13. There was no acetylene black conductive layer in the anode used in Example 33.

Table 2

| | Thickness of anode active material layer (μm) | Thickness of conductive layer (μm) | Anode active material layer | | C004/C110 of anode active material layer (fully charged state) | DCR (Q) | CC/(CC+CV) × 100 % at rate of 1.5C |
|---|---|---|---|---|---|---|---|
| | | | Average ID'/IG' value | Standard deviation | | | |
| Example 13 | 165 | 2 | 0.18 | 0.20 | 17 | 43.7 | 60.0% |
| Example 16 | 160 | 2 | 0.31 | 0.13 | 9 | 42.3 | 67.4% |
| Example 17 | 130 | 2 | 0.38 | 0.09 | 9 | 41.8 | 68.8% |
| Example 18 | 110 | 2 | 0.40 | 0.08 | 9 | 41.3 | 70.2% |
| Example 19 | 90 | 2 | 0.50 | 0.01 | 9 | 40.6 | 71.9% |
| Example 20 | 160 | 1 | 0.27 | 0.10 | 11 | 42.5 | 66.7% |
| Example 22 | 130 | 1 | 0.37 | 0.09 | 11 | 42.0 | 68.1% |
| Example 22 | 110 | 1 | 0.39 | 0.09 | 11 | 41.6 | 69.6% |
| Example 23 | 90 | 1 | 0.43 | 0.09 | 11 | 41.0 | 70.9% |
| Example 24 | 160 | 0.5 | 0.21 | 0.11 | 13 | 42.9 | 64.2% |
| Example 25 | 130 | 0.5 | 0.22 | 0.10 | 13 | 42.7 | 65.8% |
| Example 26 | 110 | 0.5 | 0.33 | 0.09 | 13 | 42.2 | 67.5% |
| Example 27 | 90 | 0.5 | 0.38 | 0.09 | 13 | 41.9 | 68.1% |
| Example 28 | 160 | 0.3 | 0.19 | 0.14 | 15 | 43.2 | 61.4% |
| Example 29 | 130 | 0.3 | 0.20 | 0.14 | 15 | 43.0 | 63.3% |
| Example 30 | 110 | 0.3 | 0.21 | 0.13 | 15 | 42.8 | 64.9% |
| Example 31 | 90 | 0.3 | 0.25 | 0.12 | 15 | 42.6 | 66.6% |
| Example 32 | 165 | 3 | 0.18 | 0.20 | 17 | 42.4 | 58.9% |
| Example 33 | 165 | 0 | 0.18 | 0.20 | 17 | 42.7 | 59.5% |

The results show that as the thickness of the anode active material layer of the lithium-ion battery decreased, the electrolyte more easily infiltrated the anode active material, the contact area between the anode active material and the electrolyte increased, and the lithium-ion migration path was shortened, thereby reducing the direct current resistance (DCR) of the lithium-ion battery and improving the charge rate performance of the lithium-ion battery. As the thickness of the conductive layer increased, the C004/C110 value of the anode active material layer decreased, the anisotropy of the anode active material layer decreased (that is, the isotropy increased), and the contact area between the electrolyte and the anode active material increased, helping diffusion of lithium ions, thereby reducing the direct current resistance (DCR) of the lithium-ion battery and improving the charge rate performance of the lithium-ion battery.

The anode of the lithium-ion battery included a conductive layer with a thickness of 0.3 $\mu$m to 3 $\mu$m. This helped to further improve the direct current resistance (DCR) and charge rate performance of the lithium-ion battery.

In this specification, reference to "an embodiment", "some embodiments", "one embodiment", "another example", "an example", "a specific example", or "some examples" means that at least one embodiment or example in this application includes a specific feature, structure, material, or characteristic described in this embodiment or example. Accordingly, descriptions appearing in the specification, such as "in some embodiments", "in the embodiments", "in an embodiment", "in another example", "in an example", "in a particular example", or "for example", are not necessarily references to the same embodiments or examples in this application. In addition, a specific feature, structure, material, or characteristic herein may be combined in any appropriate manner in one or more embodiments or examples.

Although illustrative embodiments have been demonstrated and described, a person skilled in the art should understand that the foregoing embodiments are not to be construed as limiting this application, and that the embodiments may be changed, replaced, and modified without departing from the spirit, principle, and scope of this application.

**Claims**

1. An anode active material, comprising graphite, wherein according to Raman spectroscopy, for particles having Dv50 of 7.1 $\mu$m to 15.1 $\mu$m of the anode active material, a ratio $ID^1/IG^1$ of a peak intensity $ID^1$ at 1350 cm$^{-1}$ to a peak intensity $IG^1$ at 1580 cm$^{-1}$ ranges from 0.41 to 0.63, and for particles having Dv50 of 23.5 $\mu$m to 39.9 $\mu$m of the anode active material, a ratio $ID^2/IG^2$ of a peak intensity $ID^2$ at 1350 cm$^{-1}$ to a peak intensity $IG^2$ at 1580 cm$^{-1}$ ranges from 0.18 to 0.39.

2. The anode active material according to claim 1, wherein according to Raman spectroscopy, the anode active material has an average value of a ratio ID/IG of a peak intensity ID at 1350 cm$^{-1}$ to a peak intensity IG at 1580 cm$^{-1}$ ranging from 0.15 to 0.50, with a standard deviation of 0.02 to 0.23.

3. The anode active material according to claim 1, wherein according to an X-ray diffraction method, a grain size La of graphite in a horizontal direction ranges from 70 nm to 90 nm, and a grain size Lc of graphite in a vertical direction ranges from 20 nm to 30 nm.

4. The anode active material according to claim 1, wherein there is an amorphous carbon layer on a surface of graphite, and a thickness of the amorphous carbon layer ranges from 1 nm to 50 nm.

5. The anode active material according to claim 1, wherein the anode active material satisfies at least one of condition (a) or (b):

   (a) that under a pressure of 5t, compacted density of the anode active material ranges from 1.80 g/cm$^3$ to 2.00 g/cm$^3$; or
   (b) that Dv50 of the anode active material ranges from 10.0 $\mu$m to 23.0 $\mu$m, and that Dv99 of the anode active material ranges from 29.9 $\mu$m to 50.2 $\mu$m.

6. An electrochemical device, comprising a cathode, a separator, an electrolyte, and an anode, wherein the anode comprises an anode current collector and an anode active material layer, and the anode active material layer comprises the anode active material according to any one of claims 1 to 5.

7. The electrochemical device according to claim 6, wherein when the electrochemical device is in a fully charged state, the anode active material layer has an average value of a ratio ID'/IG' of a peak intensity ID' at 1350 cm$^{-1}$ to a peak intensity IG at 1580 cm$^{-1}$ ranging from 0.19 to 0.50, with a standard deviation of 0.01 to 0.2.

8. The electrochemical device according to claim 6, wherein when the electrochemical device is in a fully charged state, according to differential scanning calorimetry, an exothermic area of the anode active material layer ranges from 500 J/g to 2000 J/g at 50°C to 450°C.

9. The electrochemical device according to claim 6, wherein the anode active material layer satisfies at least one of condition (d) or (e):

(d) that a thickness of the anode active material layer ranges from 90 $\mu$m to 160 $\mu$m; or
(e) that when the electrochemical device is in a fully charged state, according to an X-ray diffraction method, a ratio C004/C110 of a peak area C004 of a (004) plane to a peak area C110 of a (110) plane of the anode active material layer ranges from 6 to 15.

10. The electrochemical device according to claim 6, wherein the anode further comprises a conductive layer, the conductive layer is disposed between the anode current collector and the anode active material layer, and the conductive layer satisfies at least one of condition (f) or (g):

(f) that a thickness of the conductive layer ranges from 0.3 $\mu$m to 3 $\mu$m; or
(g) that the conductive layer comprises a carbon material, wherein the carbon material comprises at least one of carbon nanotube, carbon fiber, carbon black, or graphene.

11. An electronic device, comprising the electrochemical device according to any one of claims 6 to 10.

FIG. 1

FIG. 2

FIG. 3

<table>
<tr><td colspan="2" align="center">**INTERNATIONAL SEARCH REPORT**</td><td>International application No.<br>**PCT/CN2020/091581**</td></tr>
</table>

**A. CLASSIFICATION OF SUBJECT MATTER**

H01M 4/587(2010.01)i; C01B 32/184(2017.01)i

According to International Patent Classification (IPC) or to both national classification and IPC

**B. FIELDS SEARCHED**

Minimum documentation searched (classification system followed by classification symbols)

H01M, C01B

Documentation searched other than minimum documentation to the extent that such documents are included in the fields searched

Electronic data base consulted during the international search (name of data base and, where practicable, search terms used)

CNPAT; WPI; EPODOC; CNKI: 石墨, 峰, 强度, 粒径, 粒度, graphite, strength, intensity, size, D50, Dv50, ID, IG

**C. DOCUMENTS CONSIDERED TO BE RELEVANT**

| Category* | Citation of document, with indication, where appropriate, of the relevant passages | Relevant to claim No. |
|---|---|---|
| A | CN 110651386 A (LG CHEMICAL LTD.) 03 January 2020 (2020-01-03)<br>description, paragraphs 42, 64, figure 2 | 1-11 |
| A | CN 109728300 A (NINGBO SHANYUAN GRAPHENE TECHNOLOGY CO., LTD.) 07 May 2019 (2019-05-07)<br>entire document | 1-11 |
| A | CN 109553080 A (HUNAN JINYE HIGH-TECH CO., LTD.) 02 April 2019 (2019-04-02)<br>entire document | 1-11 |
| A | CN 109841831 A (NINGDE AMPEREX TECHNOLOGY LTD.) 04 June 2019 (2019-06-04)<br>entire document | 1-11 |
| A | US 2014349180 A1 (SAMSUNG SDI CO., LTD.) 27 November 2014 (2014-11-27)<br>entire document | 1-11 |
| A | JP 2013030355 A (HITACHI VEHICLE ENERGY LTD.) 07 February 2013 (2013-02-07)<br>entire document | 1-11 |

☐ Further documents are listed in the continuation of Box C.    ☑ See patent family annex.

| | |
|---|---|
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **07 December 2020** | **23 December 2020** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/091581**

| Patent document cited in search report | | | Publication date (day/month/year) | Patent family member(s) | | | Publication date (day/month/year) |
|---|---|---|---|---|---|---|---|
| CN | 110651386 | A | 03 January 2020 | EP | 3641029 | A1 | 22 April 2020 |
| | | | | US | 2020185719 | A1 | 11 June 2020 |
| | | | | EP | 3641029 | A4 | 22 July 2020 |
| | | | | KR | 20190049585 | A | 09 May 2019 |
| | | | | WO | 2019088672 | A1 | 09 May 2019 |
| CN | 109728300 | A | 07 May 2019 | None | | | |
| CN | 109553080 | A | 02 April 2019 | CN | 109553080 | B | 01 May 2020 |
| CN | 109841831 | A | 04 June 2019 | None | | | |
| US | 2014349180 | A1 | 27 November 2014 | US | 10305094 | B2 | 28 May 2019 |
| | | | | KR | 20140139294 | A | 05 December 2014 |
| JP | 2013030355 | A | 07 February 2013 | None | | | |

Form PCT/ISA/210 (patent family annex) (January 2015)